# EUROPÄISCHE PATENTSCHRIFT

(11) **EP 0 901 582 B1**
(45) Veröffentlichungstag und Bekanntmachung des Hinweises auf die Patenterteilung: **10.11.2004**
(21) Anmeldenummer: 97921775.9
(22) Anmeldetag: 25.04.1997
(51) Int. Cl.: F16D 55/224

(54) **TEILBELAG-SCHEIBENBREMSE**
PARTIALLY LINED DISC BRAKE
FREIN A DISQUE A GARNITURE PARTIELLE

(30) Priorität: 03.06.1996 DE 19622209
(43) Veröffentlichungstag der Anmeldung: 17.03.1999
(73) Patentinhaber: Continental Teves AG & Co. oHG, 60488 Frankfurt (DE)
(72) Erfinder: MEISS, Michael, D-61169 Friedberg (DE); KIRSCHNER, Thomas, D-60596 Frankfurt (DE); GERHARDT, Winfried, D-60489 Frankfurt (DE); LEIDECKER, Hans-Dieter, D-65931 Frankfurt (DE); WEILER, Rolf, D-65817 Eppstein (DE); METZEN, Hans-Peter, D-61352 Bad Homburg (DE)
(86) Internationale Anmeldenummer: PCT/EP1997/002143
(87) Internationale Veröffentlichungsnummer: WO 1997/046812

(56) Entgegenhaltungen:
- DE-A- 4 236 683
- DE-A- 4 318 745
- GB-A- 2 115 892
- GB-A- 2 262 145
- US-A- 3 884 332
- US-A- 4 540 068
- US-A- 4 553 645
- US-A- 4 823 920

## Beschreibung

Die Erfindung betrifft eine Teilbelag-Scheibenbremse insbesondere für Kraftfahrzeuge, mit einem am Bremsträger angeordneten rahmenförmigen Bremsgehäuse umfassend ein erstes Seitenteil mit einem Gehäuse für eine Betätigungsvorrichtung einer ersten Bremsbacke und mit einem zweiten Seitenteil zum Beaufschlagen einer zweiten Bremsbacke, wobei die parallelen Seitenteile durch ein, eine Bremsscheibe übergreifendes Brückenteil miteinander verbunden sind sowie mit zumindest einem am einlaufenden und/oder auslaufenden Endstück des Bremsgehäuses angeordneten, die Bremsscheibe übergreifenden Arm, welcher das erste Seitenteil mit dem zweiten Seitenteil zusätzlich verbindet.

Eine derartige Teilbelag-Scheibenbremse ist aus der DE-OS 39 21 346 A 1 bekannt. Das Bremsgehäuse der Teilbelag-Scheibenbremse umfasst ein erstes Seitenteil mit einem Gehäuse für eine Betätigungsvorrichtung einer ersten Bremsbacke und ein zweites Seitenteil zum Beaufschlagen einer zweiten Bremsbacke, wobei das erste Seitenteil mit dem zweiten Seitenteil mittels eines Brückenteils verbunden ist. Das Bremsgehäuse weist darüber hinaus am einlaufenden und am auslaufenden Ende jeweils einen die Bremsscheibe übergreifenden Arm auf, welcher das erste Seitenteil mit dem zweiten Seitenteil verbindet.

Zwar ermöglicht es diese bekannte Scheibenbremse, den Bremsscheibendurchmesser bei gegebenem Raddurchmesser zu erhöhen, ohne daß ein Steifigkeitsverlust des Bremsgehäuses eintritt. Allerdings ist die Herstellung einer derartigen Teilbelag-Scheibenbremse aufwendig, weil insbesondere der Herstellungsprozeß des Bremsgehäuses mehrere aufwendige Bearbeitungs- und Montageoperationen umfasst. Schließlich wird das hohe Gewicht dieser Scheibenbremse als nachteilig empfunden.

Aus der US-PS 4540068 ist eine Teilbelag-Scheibenbremse der genannten Art bekannt, bei welcher in einem Schenkel des zweiten Seitenteiles eine Ausnehmung vorgesehen ist. Um die Festigkeit des zweiten Seitenteil es zu verstärken ist der obere Rand der Ausnehmung durch eine Rippe eingefaßt. Einen Hinweis, wie die Ausnehmung auszugestalten ist, um auch ohne die Verwendung einer Rippe bei einfacher Herstellung des Sattels eine hohe Festigkeit des zweiten Seitenteiles zu erhalten gibt dieses Dokument nicht.

Die Erfindung geht daher aus von einer Teilbelag-Scheibenbremse der sich aus dem Oberbegriff des Anspruchs 1 ergebenden Gattung.

Aufgabe der vorliegenden Erfindung ist es, Lösungen für eine eine leistungsfähige Teilbelag-Scheibenbremse bereitzustellen, welche bei geringem Gewicht eine vergrößerte Steifigkeit aufweist und darüber hinaus einfach und kostengünstig herstellbar ist.

Eine erste Lösung der Aufgabe besteht aus den kennzeichnenden Merkmalen des Patentanspruchs 1. Erfindungsgemäß ist die Ausnehmung dadurch ausgezeichnet, daß die als zylindrische Bohrung ausgebildete Ausnehmung fluchtend zu einer Achse des Gehäuses für die Betätigungsvorrichtung angeordnet ist und daß der größte Durchmesser der Ausnehmung größer oder gleich dem Kolbendurchmesser der Betätigungsvorrichtung ist auf. Von Vorteil ist, daß eine derartige Ausnehmung die Herstellung stark vereinfacht. Darüber hinaus führt die Ausnehmung zu einer Gewichtseinsparung.

Eine zweite Lösung der Aufgabe besteht aus den kennzeichnenden Merkmalen des Patentanspruchs 2. Erfindungsgemäß ist die Ausnehmung bei dieser Lösung dadurch ausgezeichnet, daß die nach Art eines Langloches mit zumindest zwei beabstandeten, parallelen Seitenflächen ausgebildete Ausnehmung fluchtend zu einer Achse des Gehäuses für die Betätigungsvorrichtung angeordnet ist und daß der größte Durchmesser der Ausnehmung größer oder gleich dem Kolbendurchmesser (30) der Betätigungsvorrichtung ist.

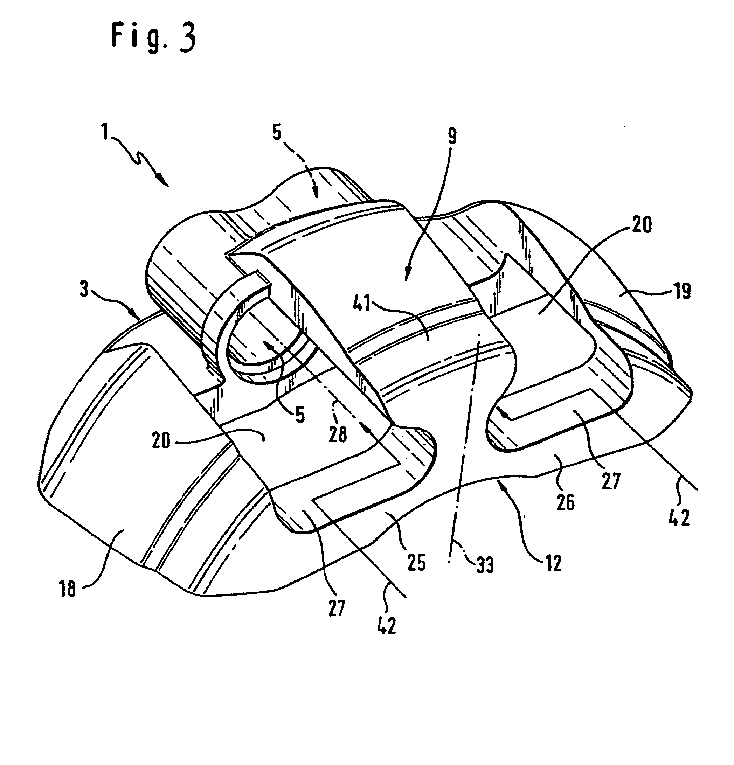

Es ist weiterhin vorteilhaft, wenn die Ausnehmung eine freie Öffnung beispielsweise gemäß Fig. 3 aufweist. Eine über den kompletten Bohrungsdurchmesser verlaufende Öffnung nach Art einer U-förmigen Ausnehmung fällt nicht unter den Anspruchsgegenstand. Eine derartige Ausführungsform erlaubt eine noch einfachere Herstellung.

Ausführungsbeispiele und Weiterbildungen der Erfindung gehen auch aus der Zeichnung zusammen mit der Beschreibung hervor.

Es zeigen:
- Fig. 1: einen Schnitt durch ein Bremsgehäuse;
- Fig. 2: eine entlang der radialen Mittelachse abgeschnittene Seitenansicht des Bremsgehäuses gemäß Fig. 1;
- Fig. 3: eine perspektivische Ansicht eines Bremsgehäuses für zwei Bremskolben.

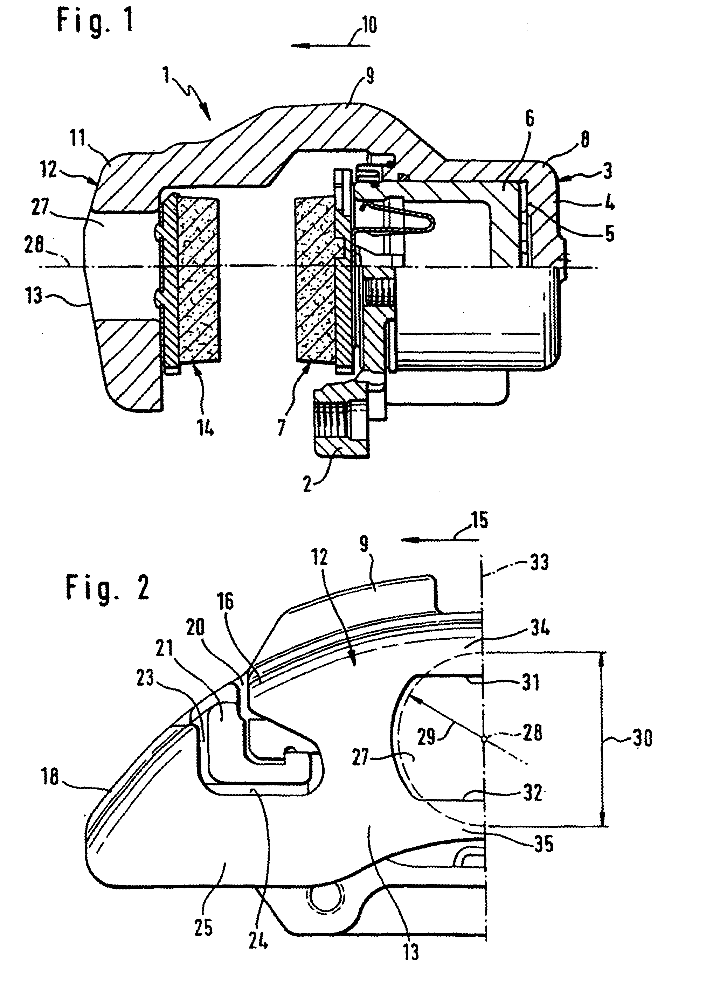

Die Fig. 1 und 2 zeigen ein rahmenförmiges Bremsgehäuse 1 für eine Teilbelag-Scheibenbremse, die mit einem Bremsträger 2 an einem Achsteil eines Kraftfahrzeuges befestigbar ist. Das vorzugsweise als Faustrahmen ausgebildete Bremsgehäuse 1 ist an dem Bremsträger 2 axial bewegbar angeordnet und umfasst ein erstes Seitenteil 3 mit einem Schenkel 4, an dem ein Gehäuse 5 für eine Betätigungsvorrichtung 6 vorgesehen ist. Die Betätigungsvorrichtung 6 beaufschlagt eine erste Bremsbacke 7, wodurch diese in Anlage an eine nicht gezeichnete Bremsscheibe drängbar ist. Im wesentlichen senkrecht zu dem Schenkel 4 und gemäß dem Ausführungsbeispiel einstückig an einer Schulter 8 ist ein Brückenteil 9 vorgesehen, welches Bremsscheibe und Bremsbacken übergreift. Grundsätzlich kann das Brückenteil 9 auch auf andere Art an dem Seitenteil 3 befestigt, insbesondere verschraubt sein. An dem, in Achsrichtung 10 äußeren Ende 11 des Brückenteiles 9 schließt sich ein, im wesentlichen parallel zum Seitenteil 3 sich erstreckendes zweites Seitenteil 12 mit einem Schenkel 13 an, welcher eine zweite Bremsbacke 14 beaufschlagt. In Umfangsrichtung 15 befindet sich am,je nach Drehrichtung der Bremsscheibe, einlaufenden und auch am auslaufenden Endstück 16,17 des Bremsgehäuses 1 je ein Arm 18,19, welcher ausgehend von dem ersten Seitenteil 3 die Bremsscheibe übergreift und sich auf der Vorderseite und der Rückseite der Bremsscheibe jeweils nach radial innen erstreckt. Alternativ dazu kann auch nur ein Arm an einem der Endstücke 16,17 vorgesehen sein. Zwischen jedem Arm 18,19 und dem Brückenteil 9 befindet sich eine parallel dazu angeordnete Ausnehmung 20, die sich über die gesamte Brückenlänge und bis in den Schenkel 13 erstreckt. Gemäß Fig. 2 greift der Bremsträger 2 zumindest teilweise mit Halte- und Führungsmitteln 21 für die Bremsbacken 7,14 in die Ausnehmung 20 ein. Zwischen der Ausnehmung 20 und den Halte- und Führungsmitteln 21 des Bremsträgers 2 ist ausreichend Spiel vorgesehen. Die Ausnehmung 20 in dem Schenkel 13 ist L-förmig und verfügt über ein, mit dem brückenseitigen Ausnehmungsteil 22 fluchtendes Teilstück 23, welches sich nach radial innen erstreckt sowie über ein im wesentlichen dazu rechtwinkliges Teilstück 24, welches sich hin zur Achse 28 des Gehäuses 5 erstreckt. Im Bereich des zweiten Seitenteiles 12 verfügt jeder Arm 18,19 über jeweils einen tangential zur Bremsscheibe angeordneten und sich in Umfangsrichtung 15 erstreckenden Steg 25,26 der den betreffenden Arm 18,19 mit dem Seitenteil 12 verbindet. Die Stege 25,26 erstrecken sich im wesentlichen parallel zu den Schenkeln 4,13. Die Seitenteile 3,12 umgreifen zusammen mit dem Brückenteil 9 und den Armen 18,19 nebst Stegen 25,26 die Bremsscheibe U-förmig und nach Art eines Rahmens in beanspruchungsgerechter Weise. Dadurch ist gewährleistet, daß die von den Bremsbacken 7,14 übertragenen Kräfte insbesondere von den Armen 18,19 und den Stegen 25,26 sowie vom Brükkenteil 9 aufgenommen werden. Die Bremsbacken 7,14 stützen sich vorzugsweise mit Führungsflächen an dem Bremsträger 2 ab, der an einem Fahrzeug oder einem Fahrzeugbauteil angeordnet ist. Grundsätzlich kommt eine Push/Pull-Abstützung der Bremsbacken 7,14 mit Hilfe von Hammerköpfen zum Einsatz, es ist aber ebenso eine Pull/Push-Abstützung denkbar, bei der die Bremsbacken 7,14 zu Beginn des Bremsvorganges zugbeansprucht sind und bei größeren Bremskräften Druckbeanspruchung auftritt, wenn eine Führungsfläche am ablaufenden Ende der Bremsbacken 7,14 anliegt. Der Schenkel 13 des zweiten Seitenteiles 12 weist eine Ausnehmung 27 auf, welche fluchtend zu einer Achse 28 des Gehäuses 5 für die Betätigungsvorrichtung 6 angeordnet ist. Die Ausnehmung 27 kann beispielsweise eine zylindrische Bohrung sein, deren lichter Durchmesser 29 größer oder gleich dem Kolbendurchmesser 30 der Betätigungsvorrichtung 5 ist. In der Zeichnung ist die Ausnehmung 27 nach Art eines Langloches mit zwei beabstandeten, parallelen Seitenflächen 31,32 ausgebildet, die sich im wesentlichen senkrecht zu einer radialen Mittelachse 33 erstrecken. Der größte lichte Durchmesser 29 ist auch hierbei größer oder gleich dem Kolbendurchmesser 30. Radial oberhalb und unterhalb der Ausnehmung 27, bezogen auf die Achse 28, verfügt der Schenkel 13 über jeweils einen Steg 34,35, der das Seitenteil 12 zusätzlich verstärkt. Die Höhe der Stege 34,35 richtet sich einerseits nach der Gesamtlänge des Schenkels 13 und andererseits nach der notwendigen Auflagefläche für die zweite Bremsbacke 14.

Bei einem Bremsgehäuse gemäß den Fig. 1 und 2 kann das Bearbeitungswerkzeug für das Gehäuse 5 in besonders einfacher Weise durch die Ausnehmung 27 in das Bremsgehäuse 1 eingeführt werden, selbst wenn dieses, wie gezeichnet, einteilig ist, so daß sich die Herstellungskosten stark verringern. Die Form der Ausnehmung 27 nach Art eines Langloches führt darüber hinaus zu einem besonders steifen Bremsgehäuse 1 mit geringer Volumenaufnahme.

Als Material für das Bremsgehäuse 1 und für den Bremsträger 2 kommen insbesondere Gußwerkstoffe wie beispielsweise Grauguß oder Kugelgraphitguß aber auch Leichtmetalle wie beispielsweise Aluminium in Frage.

In Figur 3 ist als weiteres Ausführungsbeispiel ein einteiliges Bremsgehäuse 1 mit zwei Gehäusen 5 einer hydraulischen Betätigungsvorrichtung dargestellt. Das Bremsgehäuse 1 ist als Rahmensattel ausgeführt und durch die beiden Gehäuse 5 in der Lage zwei nicht gezeigte Bremskolben aufzunehmen, wodurch sich die Bremsleistung steigern läßt. Wie bei den Ein-Kolben-Ausführungen verfügt das Bremsgehäuse 1 über ein innenliegendes 3 und ein außenliegendes Seitenteil 12 sowie ein Brückenteil 9, das die nicht gezeigte Bremsscheibe übergreift und die beiden Seitenteile 3, 12 miteinander verbindet. Das Brückenteil 9 ist durch zwei im wesentlichen axial verlaufende Ausnehmungen 20 unterbrochen, wodurch das Brükkenteil einen Mittelteil 41 und zwei tangential versetzt dazu angeordnete seitliche Arme 18, 19 ausbildet. Das Mittelteil 41 erstreckt sich vom innenliegenden Seitenteil 3 radial oberhalb der Gehäuse 5 ausgehend über die Bremsscheibe. Auf der Außenseite des Bremsgehäuses 1 ist das Mittelteil 41 über in Sekantentichtung verlaufende Stege 25, 26 mit den seitlichen Armen 18, 19 verbunden. Es ergibt sich insgesamt ein rahmenförmiges Bremsgehäuse 1, das eine etwa gleichmäßige Aufteilung der hydraulischen Zuspannkraft auf das Mittelteil 41 und die beiden seitlichen Arme 18, 19 ermöglicht.

Die Ausnehmungen 20 im Brückenteil 9 dienen hauptsächlich der Aufnahme der die Bremscheibe übergreifenden Arme eines ortsfest angebrachten Bremshalters, zu dem das Bremsgehäuse 1 axial verschiebbar gelagert ist. Weiterhin gehen die Ausnehmungen 20 im Brückenteil 9 in die Ausnehmungen 27 des äußeren Gehäuseteiles über. Dabei fluchtet jede Ausnehmung 27 im der Symmetrieebene des Bremsgehäuse 1 zugewandten Bereich mit der zugehörigen Bohrungsachse 28 des Gehäuses 5. Diese Überschneidung von Ausnehmung 27 und Gehäuse 5 ist unbedingt erforderlich, um mit einem spanenden Werkzeug von der Außenseite des Bremsgehäuses 1 her die Kolbenbohrungen in den beiden Gehäusen 5 bei einteiligem Bremsgehäuse fertigen zu können. Im einzelnen wird das Bearbeitungswerkzeug in Sekantenrichtung versetzt zur Gehäuseachse 28 in das Bremsgehäuse 1 eingeführt, in Sekantenrichtung zur Mittelebene 33 des Bremsgehäuses verschoben und kann dann in axialer Richtung den Bearbeitungsgang der Kolbenbohrung ausführen. Das Bearbeitungswerkzeug folgt damit dem Verfahrweg 42.

Selbstverständlich läßt sich auch die Rahmensattelausführung aus Figur 3 in vorteilhafter Weise aus Gründen der Gewichtsersparnis aus Leichtmetall ausbilden. Idealerweise verknüpft ein solches Bremsgehäuse die Vorteile einer hohen Leistungsfähigkeit mit geringer Volumenaufnahme mit einer kostengünstigen Fertigung bei gleichzeitig geringem Gewicht.

## Patentansprüche

1. Teilbelag-Scheibenbremse, insbesondere für Kraftfahrzeuge, mit einem am Bremsträger angeordneten rahmenförmigen Bremsgehäuse (1) umfassend ein erstes Seitenteil (3) mit einem Gehäuse (5) für eine Betätigungsvorrichtung (6) einer ersten Bremsbacke (7) und mit einem zweiten Seitenteil (12) zum Beaufschlagen einer zweiten Bremsbacke (14), wobei die parallelen Seitenteile (3, 12) durch ein, eine Bremsscheibe übergreifendes Brückenteil (9) miteinander verbunden sind sowie mit zumindest einem am einlaufenden und/oder auslaufenden Endstück (16, 17) des Bremsgehäuses (1) angeordneten, die Bremsscheibe übergreifenden Arm (18, 19), welcher das erste Seitenteil (3) mit dem zweiten Seitenteil (12) zusätzlich verbindet, wobei in einem Schenkel (13) des zweiten Seitenteiles (12) zumindest eine Ausnehmung (27) vorgesehen ist, **dadurch gekennzeichnet, daß** die als zylindrische Bohrung ausgebildete Ausnehmung (27) fluchtend zu einer Achse (28) des Gehäuses (5) für die Betätigungsvorrichtung (6) angeordnet ist und daß der größte Durchmesser (29) der Ausnehmung (27) größer oder gleich dem Kolbendurchmesser (30) der Betätigungsvorrichtung (6) ist.

2. Teilbelag-Scheibenbremse, insbesondere für Kraftfahrzeuge, mit einem am Bremsträger angeordneten rahmenförmigen Bremsgehäuse (1) umfassend ein erstes Seitenteil (3) mit einem Gehäuse (5) für eine Betätigungsvorrichtung (6) einer ersten Bremsbacke (7) und mit einem zweiten Seitenteil (12) zum Beaufschlagen einer zweiten Bremsbacke (14), wobei die parallelen Seitenteile (3, 12) durch ein, eine Bremsscheibe übergreifendes Brückenteil (9) miteinander verbunden sind sowie mit zumindest einem am einlaufenden und/oder auslaufenden Endstück (16, 17) des Bremsgehäuses (1) angeordneten, die Bremsscheibe übergreifenden Arm (18, 19), welcher das erste Seitenteil (3) mit dem zweiten Seitenteil (12) zusätzlich verbindet, wobei in einem Schenkel (13) des zweiten Seitenteiles (12) zumindest eine Ausnehmung (27) vorgesehen ist, **dadurch gekennzeichnet, daß** die nach Art eines Langloches mit zumindest zwei beabstandeten, parallelen Seitenflächen (31, 32) ausgebildete Ausnehmung (27) fluchtend zu einer Achse (28) des Gehäuses (5) für die Betätigungsvorrichtung (6) angeordnet ist und daß der größte Durchmesser (29) der Ausnehmung (27) größer oder gleich dem Kolbendurchmesser (30) der Betätigungsvorrichtung (6) ist.

3. Teilbelag-Scheibenbremse nach Anspruch 2, **dadurch gekennzeichnet, daß** die Erstreckungsrichtung der Seitenfläche (31,32) im wesentlichen parallel zu einer radialen Mittelachse (33) des Bremsgehäuses (1) angeordnet ist.

4. Teilbelag-Scheibenbremse nach Anspruch 2, **dadurch gekennzeichnet, daß** die Seitenflächen (31,32) im wesentlichen senkrecht zur radialen Mittelachse (33) des Bremsgehäuses (1) angeordnet sind.

5. Teilbelag-Scheibenbremse nach einem oder mehreren der vorhergehenden Ansprüche, **dadurch gekennzeichnet, daß** das Seitenteil (12) mit der Ausnehmung (27) einstückig an dem anderen Seitenteil (3) angeordnet ist.

6. Teilbelag-Scheibenbremse nach Anspruch 1 oder 2, **dadurch gekennzeichnet, daß** eine zusätzliche Ausnehmung (20) zwischen Brückenteil (9) und Arm (18, 19) angeordnet ist, sich über die Brückenlänge erstreckt und im Bereich des Schenkels (13) L-Form aufweist.

7. Teilbelag-Scheibenbremse nach einem oder mehreren der vorhergehenden Ansprüche, **dadurch gekennzeichnet, daß** das Bremsgehäuse aus Leichtmetall besteht.

8. Teilbelag-Scheibenbremse nach einem oder mehreren der vorhergehenden Ansprüche, **dadurch gekennzeichnet, daß** die Betätigungsvorrichtung zwei Gehäuse (5) besitzt und das Brückenteil (9) zwei sich im wesentlichen axial erstreckende Ausnehmungen (20) aufweist, die in zugehörige Ausnehmungen (27) des zweiten, äußeren Seitenteiles (12) übergehen, wobei jede Ausnehmung (27) im Seitenteil (12) zumindest in Teilbereichen mit jeweils einer Bohrungsachse (28) des Gehäuses (5) für die Betätigungsvorrichtung fluchtet.

## Claims

1. Spot-type disc brake, particularly for motor vehicles, with a frame-type brake housing (1) arranged on the brake support, including a first side element (3) with a housing (5) for an actuating device (6) of a first brake shoe (7) and with a second side element (12) for acting upon a second brake shoe (14), the parallel side elements (3,12) being connected to one another by means of a bridge element (9) straddling a brake disc, and to at least one arm (18, 19) arranged on the leading and/or trailing end piece (16, 17) of brake housing (1) and straddling the brake disc, said arm in addition connecting the first side element (3) with the second side element (12), wherein at least one recess (27) is provided in a leg (13) of the second side element (12),
**characterized in that** the recess (27) designed in the way of a cylindrical bore is aligned to an axis (28) of the housing (5) for the actuating device (6), and **in that** the maximum diameter (29) of the recess (27) is larger than or equal to the piston diameter (30) of the actuating device (6).

2. Spot-type disc brake, particularly for motor vehicles, with a frame-type brake housing (1) arranged on the brake support, including a first side element (3) with a housing (5) for an actuating device (6) of a first brake shoe (7) and with a second side element (12) for acting upon a second brake shoe (14), the parallel side elements (3,12) being connected to one another by means of a bridge element (9) straddling a brake disc, and to at least one arm (18, 19) arranged on the leading and/or trailing end piece (16, 17) of brake housing (1) and straddling the brake disc, said arm in addition connecting the first side element (3) with the second side element (12), wherein at least one recess (27) is provided in a leg (13) of the second side element (12),
**characterized in that** the recess (27) designed in the way of a groove with at least two parallel lateral faces (31, 32) spaced from each other is arranged so as to be in alignment with an axis (28) of the housing (5) for the actuating device (6), and **in that** the maximum diameter (29) of the recess (27) is larger than or equal to the piston diameter (30) of the actuating device (6).

3. Spot-type disc brake according to claim 2, **characterized in that** the direction of extension of the lateral face (31, 32) is arranged essentially parallel to a radial centre line (33) of the brake housing (1).

4. Spot-type disc brake according to claim 2, **characterized in that** the lateral faces (31, 32) are arranged essentially perpendicular to the radial centre line (33) of the brake housing (1).

5. Spot-type disc brake according to one or more of the preceding claims, **characterized in that** the side element (12) is arranged integrally with the recess (27) on the other side element (3).

6. Spot-type disc brake according to claim 1 or 2, **characterized in that** between bridge element (9) and arm (18, 19) an additional recess (20) is provided which extends over the length of the bridge and is L-shaped in the area of the leg (13).

7. Spot-type disc brake according to one or more of the preceding claims, **characterized in that** the brake housing is made of light alloy.

8. Spot-type disc brake according to one or more of the preceding claims, **characterized in that** the actuating device includes two housings (5) and the bridge element (9) is provided with two recesses (20) extending essentially in axial direction and merging into associated recesses (27) on the second, outer side element (12), each recess (27) in the side element (12) being aligned at least in part with one bore axis (28) each of the housing (5) for the actuating device.

## Revendications

1. Frein à disque à garniture partielle, en particulier pour véhicule automobile, avec un boîtier de frein (1) en forme de cadre, disposé sur le porte-frein, comprenant une première partie latérale (3) avec un boîtier (5) pour un dispositif d'actionnement (6) d'une première mâchoire de frein (7) et avec une deuxième partie latérale (12) pour agir sur une deuxième mâchoire de frein (14), les parties latérales (3 ; 12) parallèles étant reliées entre elles par une partie formant pont (9) passant sur le disque de frein, ainsi qu'avec au moins un bras (18 ; 19) disposé sur l'embout (16 ; 17) entrant et/ou sortant du boîtier de frein (1), et passant sur le disque de frein, lequel bras relie en outre la première partie latérale (3) à la deuxième partie latérale (12), un évidement (27) au moins étant prévu dans un côté (13) de la deuxième partie latérale (12), **caractérisé en ce que** l'évidement (27) réalisé comme alésage cylindrique est aligné avec un axe (28) du boîtier (5) pour le dispositif d'actionnement (6), et **en ce que** le plus grand diamètre (29) de l'évidement (27) est supérieur ou égal au diamètre (30) du piston du dispositif d'actionnement (6).

2. Frein à disque à garniture partielle, en particulier pour véhicule automobile, avec un boîtier de frein (1) en forme de cadre, disposé sur le porte-frein, comprenant une première partie latérale (3) avec un boîtier (5) pour un dispositif d'actionnement (6) d'une première mâchoire de frein (7) et avec une deuxième partie latérale (12) pour agir sur une deuxième mâchoire de frein (14), les parties latérales (3, 12) parallèles étant reliées entre elles par une partie formant pont (9) passant sur le disque de frein, ainsi qu'avec au moins un bras (18, 19) disposé sur l'embout (16, 17) entrant et/ou sortant du boîtier de frein (1), et passant sur le disque de frein, lequel bras relie en outre la première partie latérale (3) à la deuxième partie latérale (12), un évidement (27) au moins étant prévu dans un côté (13) de la deuxième partie latérale (12), **caractérisé en ce que** l'évidement (27) réalisé à la manière d'un trou oblong avec au moins deux surfaces latérales (31, 32) parallèles espacées, est aligné avec un axe (28) du boîtier (5) pour le dispositif d'actionnement (6), et **en ce que** le plus grand diamètre (29) de l'évidement (27) est supérieur ou égal au diamètre (30) du piston du dispositif d'actionnement (6).

3. Frein à disque à garniture partielle selon la revendication 2, **caractérisé en ce que** la direction de l'étendue de la surface latérale (31 ; 32) est sensiblement parallèle à un axe médian radial (33) du boîtier de frein (1).

4. Frein à disque à garniture partielle selon la revendication 2, **caractérisé en ce que** les surfaces latérales (31 ; 32) sont disposées sensiblement perpendiculairement à l'axe médian radial (33) du boîtier de frein (1).

5. Frein à disque à garniture partielle selon une ou plusieurs des revendications précédentes, **caractérisé en ce que** la partie latérale (12) est disposée d'un seul tenant avec l'évidement (27) sur l'autre partie latérale (3).

6. Frein à disque à garniture partielle selon la revendication 1 ou 2, **caractérisé en ce qu'**un évidement (20) supplémentaire est disposé entre la partie formant pont (9) et le bras (18 ; 19), s'étend sur la longueur du pont et présente une forme en L dans la zone du côté (13).

7. Frein à disque à garniture partielle selon une ou plusieurs des revendications précédentes, **caractérisé en ce que** le boîtier de frein est en métal léger.

8. Frein à disque à garniture partielle selon une ou plusieurs des revendications précédentes, **caractérisé en ce que** le dispositif d'actionnement possède deux boîtiers (5) et la partie formant pont (9) présente deux évidements (20) s'étendant sensiblement axialement, qui se prolongent dans des évidements (27) correspondants de la deuxième partie latérale (12) extérieure, chaque évidement (27) étant aligné dans la partie latérale (12), au moins dans des zones partielles, avec un axe d'alésage (28) respectif du boîtier (5) du dispositif d'actionnement.
